# EUROPÄISCHE PATENTSCHRIFT

(11) **EP 0 923 422 B1**
(45) Veröffentlichungstag und Bekanntmachung des Hinweises auf die Patenterteilung: **22.05.2002**
(21) Anmeldenummer: 97941822.5
(22) Anmeldetag: 21.08.1997
(51) Int. Cl.: B23B 51/04

(54) **SCHNEIDEINSATZ ZUM BOHREN UND BOHRWERKZEUG**
CUTTING INSERT FOR DRILLING AND DRILL
OUTIL DE COUPE RAPPORTE S'UTILISANT POUR PERCER ET PERCEUSE

(30) Priorität: 23.08.1996 DE 19634086
(43) Veröffentlichungstag der Anmeldung: 23.06.1999
(73) Patentinhaber: Widia GmbH, 45145 Essen (DE)
(72) Erfinder: HEINLOTH, Markus, D-92353 Postbauer-Heng (DE)
(74) Vertreter: Vomberg, Friedhelm, Dipl.-Phys.
(86) Internationale Anmeldenummer: DE9701844
(87) Internationale Veröffentlichungsnummer: WO9807539

(56) Entgegenhaltungen:
- EP-A- 0 088 505
- EP-A- 0 112 136
- EP-A- 0 775 547
- EP-B- 0 054 913
- EP-B- 0 181 844
- WO-A-92/12817
- WO-A-93/02824
- WO-A-95/30505
- DE-A- 2 751 255
- DE-A- 3 419 350
- DE-A- 4 416 040
- DE-B- 2 730 418
- FR-A- 2 387 723
- GB-A- 2 190 863

## Beschreibung

Die Erfindung betrifft einen Schneideinsatz zum Bohren, mit im wesentlichen rhombischer Grundform, deren vier jeweils Schneidecken bildende Schneidkanten gebrochen sind, wobei zwei erste gegenüberliegende Schneidkanten jeweils Schneidkantenabschnitte aufweisen, die einen stumpfen Winkel zwischen 140° und <180° einschließen.

Die Erfindung betrifft ferner ein Bohrwerkzeug für Bohrungen in Vollmaterial, mit einem Schaft und mindestens zwei an der Stirnseite des Schaftes in je einer Aussparung angeordneten, mehrere Schneidkanten aufweisenden auswechselbaren Schneideinsätzen, deren Arbeitsbereiche aneinandergrenzen und sich teilweise überdecken, wobei jeder Schneideinsatz Schneidkanten mit zueinander geneigt angeordneten Schneidkantenabschnitten aufweist, die im Bearbeitungszustand gleichzeitig in Eingriff stehen, wobei der radial innerste Schneideinsatz unmittelbar an die Bohrerachse angrenzt oder diese geringfügig überschreitet.

Ein Schneideinsatz der eingangs genannten Art ist beispielsweise aus der EP 0 088 505 A1 bekannt. Dieser Schneideinsatz besitzt eine rhombische Grundform mit jeweils paarweise gegenüberliegenden Spitzen und stumpfen Schneidecken, wobei jede Schneidkante dachförmig gebrochen ist, so daß die betreffenden etwa gleich langen Schneidkantenabschnitte einer jeden Schneidkante einen Winkel zwischen 135° und 170° einschließen.

In der EP 0 088 505 wird auch ein Bohrwerkzeug der genannten Art beschrieben, dessen Bohrerstirnfläche einen radial inneren und einen radial äußeren Schneideinsatz der genannten Art aufweist, wobei die Verbindungslinie zweier Schneidecken der Schneidkante eines jeden in Eingriff mit dem Werkstück bringbaren Schneideinsatz etwa senkrecht zur Bohrerlängsachse stehen.

Die EP 0 181 844 B1 beschreibt einen Schneideinsatz mit einer im wesentlichen rechteckigen Kontur, der nur an den kurzen Seiten dachförmige (konvexe) Schneidkanten aufweist. Die beiden längeren Seitenflächen, die im mittleren Bereich gegenüber den jeweiligen Schneidecken zurückgesetzt sind, können nicht zum Zerspanen verwendet werden. Konstruktiv ist dieser Schneideinsatz derart gebildet, daß zwei regelmäßige Dreiecke mit konvex gebrochenen Seiten derart überlappend angeordnet sind, daß zwei der Ecken jedes der Dreiecke und eine Seite jedes der Dreiecke mit einer Schneidkante des rechtwinkligen Schneideinsatzes zusammenfallen und Teile der anderen Seite des Dreieckes über einen bestimmten Abstand zusammenfallen, um Nebenschneidkanten zu bilden, so daß beide dritten Ecken der Dreiecke, welche in dem Schneideinsatz angeordnet sind, sich über eine Strecke überlappen, welche das 0,5 bis 0,7fache der Länge des Schneideinsatzes zwischen den Bruch- bzw. Knickstellen der Schneidkanten beträgt, und daß in der Ebene der oberen Fläche der kürzeste Abstand zwischen den langen Seitenflächen des Schneideinsatzes kürzer ist als der Abstand zwischen den Enden der jeweiligen Schneidkanten.

Zum Bohren in Vollmaterial werden im übrigen vornehmlich sechseckige Schneidplatten verwendet, die eine im wesentlichen dreieckige Grundform haben und bei denen jeweils zwei Schneidkanten spanend in Eingriff stehen, die einen eingeschlossenen stumpfen Winkel von 120° bis 170° bilden. Die Verwendung solcher Schneidplatten wird beispielsweise in der DE 27 30 418 C2 vorgeschlagen, wobei die Schneidplatten an je einer Aussparung des Bohrerschaftes so angeordnet sind, daß die Winkelhalbierenden der in Eingriff stehenden Schneidplatten jeder Wendeschneidplatte zur Bohrerachse parallel oder unter einer geringfügigen Kippung von maximal 2° angeordnet sind. Nachteilig bei diesem Bohrer ist insbesondere, daß ein Kraftausgleich des Bohrerschaftes in radialer Richtung nur dann möglich ist, wenn jeweils beide in Eingriff stehenden Schneidkanten einer Schneidplatte im wesentlichen über ihre volle Länge in Eingriff stehen bzw. die Arbeitsbereiche benachbarter Schneidplatten sich nicht überlappen.

In der EP 0 054 913 B1 wird vorgeschlagen, die Aufnahmen für die einzelnen Wendeschneidplatten derart anzubringen, daß sich die radialen Schnittkraftkomponenten der in Eingriff stehenden Schneidkanten für jede einzelne Wendeschneidplatte ausgleichen, indem die Winkelhalbierende dieser Schneidkante gegen die Parallelen zur Bohrerachse um einen Winkel geneigt werden, der von der wirksamen Länge der längs eines Teilabschnittes in Eingriff stehenden Schneidkante abhängig ist.

Zum Ausgleich der Radialkräfte ist in der DE 27 51 255 C2 auch vorgeschlagen worden, die Radialebene des inneren Schneideinsatzes zum Ausgleich der auf den Bohrerschaft einwirkenden radialen Kräfte entgegen der Drehrichtung des Bohrers um einen bestimmten Winkel gegen den am Umfang angeordneten Schneideinsatz nach rückwärts abzuwinkeln. Hierdurch werden die Kräfte jedoch lediglich parallel gerichtet, aber nicht ausgeglichen, da der Versatzwinkel keinen Einfluß auf die Größe der Radialund der Schnittkräfte haben kann. Somit bleiben die Kräfte als Funktion der Schnittbedingungen erhalten und sind unabhängig von der Werkzeuggeometrie.

Die nach der FR-A-2 387 723 für einen Bohrer vorgeschlagenen Schneideinsätze besitzen Schneidkanten, die in ihrer Mitte eine Kerbe aufweisen, die zur Unterbrechung bzw. Limitierung der wirksamen Schneidkantenlänge dienen soll. Je nach Lage des Schneideinsatzes in bezug auf die Bohrerachse ist auch nur eine der beiden Schneidkantenhälften im wirksamen Schneideingriff.

Die WO 93/02824 beschreibt einen Schneideinsatz mit mindestens drei die Spanfläche begrenzenden Schneidecken und zwischen zwei benachbarten Schneidecken liegenden Schneidkanten, bei dem mindestens eine der Schneidkanten mindestens zwei vorstehende Schneidspitzen aufweisen soll. Die vorstehenden Schneidspitzen können entweder durch die Schneidecken einer konkav gekrümmten bzw. eine mittlere Einschnürung aufweisenden Schneidkante selbst oder durch vorstehende Spitzen gebildet werden, die gegenüber der gedachten Verbindungslinie zweier Schneidecken vorstehen und die endseitig zweier mittlerer Schneidkantenabschnitte liegen, die unter einem eine Einschnürung bildenden Winkel >180° zueinander angeordnet sind. In einer entsprechenden Variante können die vorstehenden Spitzen auch bei quadratischen oder rechteckigen Schneideinsätzen verwirklicht werden. Aus dieser Druckschrift ist es auch bekannt, im Anschluß an eine mit dem Werkstück in Eingriff zu bringende gebrochene Schneidkante jenseits der Schneidecke eine Verlängerung auszubilden, die als Nebenschneide zur Glättung der geschnittenen Bohrwandung dient.

Die EP 0 775 547 A1 (Stand der Technik nach Artikel 54 (3) EPÜ) beschreibt einen Bohrer mit Schneideinsätzen, die eine polygonale Grundform mit zwei gegenüberliegenden, aus jeweils zwei einen stumpfen Winkel bildenden Schneidkantenabschnitten bestehenden ersten Schneidkanten und zwei auf gegenüberliegenden Seiten angeordneten weiteren, aus einzelnen Schneidkantenabschnitten bestehende Schneidkanten aufweisen, von denen ein Schneidkantenabschnitt gegenüber dem benachbarten Schneidkantenabschnitt hervorsteht. Der vorstehende Schneidkantenabschnitt hat eine Länge, die etwa der Hälfte der gesamten Schneidkante entspricht. Die Schneideinsätze sind an der Bohrerstirnseite derart angeordnet, daß die Schneidkante mit dem hervorstehenden Schneidkantenabschnitt radial außen und eine dachförmig ausgebildete Schneidkante radial innen zum Zerspanungseinsatz kommt, wobei die Schneidkante des radial innen angeordneten Schneideinsatzes geringfügig über die Bohrerlängsachse übersteht.

Schließlich beschreibt die DE 44 16 040 A1 einen Bohrer mit zwei um etwa 180° in Umfangsrichtung versetzten im wesentlichen dreieckigen Wendeplatten mit Schneidkanten, deren geradlinige Hauptschneide jeweils unter einem spitzen Einstellwinkel radial auswärts und rückwärts zur Vorschubrichtung geneigt verlaufen und die beim Bohren beide zumindest annähernd die gleiche Fläche spanend überstreichen, wobei die Schneidkanten mit innenliegenden Eckbereichen oder Teilen derselben sich bis zur Werkzeugmitte oder darüber hinaus erstrecken. Dieser Eckbereich besitzt eine Rundung und eine sich daran anschließende, im Verhältnis zur jeweils geraden Hauptschneide kürzere Kante, wobei der Eckenwinkel zwischen der jeweiligen Hauptschneide und der kürzeren geraden Kante 90° oder größer ist. Durch die betreffenden abgeschrägten Eckenbereiche bleibt beim Bohren im Zentrum ein Werkstückspitzkegel stehen.

Es ist Aufgabe der vorliegenden Erfindung, einen zum eingangs genannten Schneideinsatz alternativen Schneideinsatz zu schaffen, der vier nutzbare Schneiden hat, die geeignet sind, möglichst schmale Späne zu erzeugen und die den unterschiedlichen Eingriffbedingungen sowohl radial innen wie radial außen in einem Bohrer Rechnung tragen. Die hierdurch bedingte unterschiedliche Schneidkantenform für die radial innen in einem Bohrwerkzeug einsetzbaren Schneideinsätze im Gegensatz zu radial außen einsetzbaren Schneideinsätzen sollen in einem einzigen Schneideinsatz verwirklicht werden, so daß nicht auf unterschiedliche Schneideinsätze beim Schneideinsatzwechsel in Bohrern zurückgegriffen werden muß. Zudem soll die ungenutzte, radial außen im Mantelbereich liegende Schneide des betreffenden Schneideinsatzes so konstruiert sein, daß sie nach dem Verschleiß der in Eingriff stehenden Schneide nutzbar ist, was einen Schutz beim vorherigen Einsatz vor Verschleiß vorausetzt.

Aufgabe der Erfindung ist es ferner, einen unter Verwendung eines einzigen Schneideinsatztyps geeigneten Bohrer zu schaffen.

Diese Aufgabe wird durch den Schneideinsatz nach Anspruch 1 gelöst.

Dieser Schneideinsatz besitzt eine im wesentlichen rhombische Grundform mit zwei spitzen und zwei stumpfen Schneidecken, wobei zwei erste gegenüberliegende Schneidkanten jeweils dachförmig, also konvex ausgebildet sind, während die beiden anderen sich gegenüberliegenden Schneidkanten eine Einschnürung aufweisen, also konkav ausgebildet sind. Diese Ausführungsform wird dadurch realisiert, daß die konvexen Schneidkanten jeweils Schneidkantenabschnitte aufweisen, die einen stumpfen Winkel zwischen 140° und <180° einschließen, während die beiden konvexen Schneidkanten Schneidkantenabschnitte aufweisen, die einen Winkel zwischen >180° und 230° einschließen. Gegenüber der aus der EP 0 088 505 A1 bekannten rhombischen Schneideinsatzform besitzt der erfindungsgemäße Schneideinsatz den Vorteil, daß die radial außen im Bohrer angeordnete und dort entlang der Bohrwand geführte Schneide, die erfindungsgemäß konkav ist, durch die Kombination der rhombischen und der konkaven Form vor Verschleiß weitgehend geschützt ist, so daß sie nach dem Verschleiß der konvexen Schneide noch als aktive konkave Schneide radial innen im Bohrer eingesetzt werden kann. Gegenüber den rechteckigen Schneideinsätzen nach der EP 0 181 844 B1 bzw. einer entsprechenden Form nach WO 93/02824, die nur zwei nutzbare Schneiden besitzen, kann die Zahl der nutzbaren Schneiden auf vier erhöht werden.

Weiterbildungen des erfindungsgemäßen Schneideinsatzes sind in den Ansprüchen 2 bis 6 beschrieben.

So ist im Bereich der spitzwinkligen Schneidecken der rhombischen Grundform die sich an die erste konvexe Schneidkante jenseits der Schneidecke anschließender zweite Schneidkante mit einem Schneidkantenabschnitt versehen, der vorzugsweise mit der ersten Schneidkante einen Winkel >90° und mit dem sich anschließenden Schneidkantenabschnitt der zweiten konkaven Schneidkante einen Winkel zwischen 140° und 175° bildet. Weist im Bereich der stumpfwinkligen Schneidecke der rhombischen Grundform die sich an die erste konvexe Schneidkante jenseits der Schneidecke anschließende zweite Schneidkante einen Schneidkantenabschnitt auf, der mit dem sich anschließenden Schneidkantenabschnitt der zweiten konkaven Schneidkante einen Winkel zwischen 150° und 170° bildet, so kann zusätzlich durch diese weitere konvexe Abflachung eine bessere Überschneidung der radial innen angeordneten Platte mit einer konkaven Schneide und der konvexen Schneide der Außenplatte dienen. Der hierdurch geschaffene weiche Übergang minimiert den Verschleiß, da keine scharfen Ecken vorliegen.

Vorzugsweise ist zwischen der spitzwinkligen Schneidecke und dem ersten Schneidkantenabschnitt der eine Einschnürung aufweisenden Schneidkante eine Kerbe (Einziehung) vorgesehen, welche die Schneidecke und den Schneidkantenabschnitt derart voneinander trennt, daß beim Zerspanungseinsatz der dachförmig ausgebildeten Schneidkante der Schneidkantenabschnitt nicht mit dem Werkstück in Kontakt kommt. Hierdurch ist gewährleistet, daß der Verschleiß beim Einsatz der dachförmigen Schneidkante nicht in die passive Schneidkante "einwachsen" kann. Ferner wird beim Einsatz dieser Schneidplatte in einem Bohrer im Außen- und Innenbereich jeweils den Schneideinsätzen eine genügende Freiheit gewährleistet. Beim Bohren wird zudem der Schnittdruck verringert, wenn die betreffende Schneide mit der Kerbe in Höhe der Bohrerlängsachse angeordnet wird. Hierdurch wird die Bruchgefahr an der Schneide verringert.

Die Kerbe, welche als physikalisches Trennmittel zweier nebeneinanderliegender Schneiden dient, hat vorzugsweise eine Tiefe zwischen 0,01 mm und 0,3 mm und eine Breite zwischen 0,1 mm bis 2 mm. Die Kerbe selbst ist ohne spitze Ecken als Einziehung im wesentlichen teilkreisrund ausgebildet, vorzugsweise mit einer Konkavität, die einen Radius zwischen 0,1 mm und 0,8 mm aufweist. In dem unterhalb der Kerbe liegenden Freiflächenbereich ist in entsprechender Weise eine Ausnehmung vorhanden, deren Freiwinkel zwischen 5° und 20° liegt. Der Freiwinkel der Einziehung in der Freifläche kann sich jedoch in den gleichen Bereichen wie die Freiwinkel für die gesamte Wendeschneidplatte bewegen. Die Freiflächenausnehmung unterhalb der Kerbe verjüngt sich mit zunehmendem Abstand von der Spanflächenebene in der Breite und läuft im oberen Teil der Freifläche aus.

Das Verhältnis der Länge der konvexen Schneidkante zu der Länge der konkaven Schneidkante kann gleich groß (1:1), aber auch verschieden sein und bis zu 1,2:1 betragen. Vorzugsweise sind die beiden Schneidkantenabschnitte, welche die konvexe Schneidkante bilden, im wesentlichen gleich lang. Ebenso können die geradlinigen Schneidkantenabschnitte, die unter Bildung einer Einschnürung aneinandergrenzen, gleich lang sein oder aus einem längeren und einem kürzeren Schneidkantenabschnitte bestehen, deren Längenverhältnis 1 bis 1:4 beträgt. Hierbei schließt sich der betreffende längere Schneidkantenabschnitt der konkaven Schneidkante an den vorerwähnten Schneidkantenabschnitt an, wodurch der (im Bohrer radiale) Abstand des von der Nebenschneide weiter entfernt liegenden Schneidkantenabschnittes der konkaven Schneide vergrößert wird.

Vorzugsweise bilden die äußeren Schneidkantenabschnitte der konkaven Schneidkante, die sich jeweils an eine Schneidecke anschließen, im wesentlichen ein Verhältnis von 1 bis 4:1 und nach einer weiteren Ausgestaltung der Erfindung ist die Summe (der Längen) der beiden mittleren Schneidkantenabschnitte größer als die beiden äußeren. Der Übergangsbereich vom betreffenden äußeren Schneidkantenabschnitt zum mittleren Schneidkantenabschnitt ist unter einem Radius zwischen 1 bis 2 mm abgerundet.

Zum Schutz der Schneidkanten sind weiterhin die Schneidecken und die Übergangsbereiche zweier benachbarter, unter einem spitzen oder stumpfen Winkel aneinandergrenzender Schneidkantenabschnitte abgerundet, insbesondere unter Radien zwischen 0,2 bis 1,2 mm. Dies schließt auch solche Schneideinsätze mit ein, bei denen die konvexen und konkaven Schneidkanten bzw. jeweiligen konvexen und konkaven Schneidkantenabschnitte nicht geradlinig, sondern jeweils leicht gekrümmt verlaufen.

Der die Dachform der konvexen Schneidkante charakterisierende Winkel ist ähnlich dem Komplementärwinkel des betreffenden Winkels der konkaven Schneidkante (vorzugsweise zwischen 150° und 180°).

Vorzugsweise ist die Spanfläche größer als die parallel hierzu liegende Auflagefläche des Schneideinsatzes, so daß eine positive Schneidengeometrie besteht. Weiterhin können die Freiflächen aus Teilflächen zusammengesetzt sein, die unter einem Winkel von 150° bis 180° aneinander angrenzen, wobei der Freiwinkel des an die Schneidkante angrenzenden oberen Freiflächenabschnittes kleiner als der Freiwinkel des an die Auflagefläche angrenzenden Freiflächenabschnittes ist. Die gemeinsame Grenzlinie der beiden Freiflächenabschnitte kann entweder parallel zur jeweiligen Schneidkante oder hierzu schrägwinklig verlaufen. Schließlich kann die Spanfläche Spanformelemente wie Spannuten (die parallel entlang einer jeden Schneidkante verlaufen), Erhebungen und/oder Spanformmulden in grundsätzlich nach dem Stand der Technik bekannter Weise aufweisen.

Das weiterhin erfindungsgemäße Bohrwerkzeug wird im Anspruch 7 beschrieben und ist erfindungsgemäß dadurch gekennzeichnet, daß der radial äußere Schneideinsatz eine konvexe aktive Schneidkante und der radial innere Schneideinsatz eine konkave aktive Schneidkante aufweist. Wie bereits vorstehend beschrieben, können somit in einem Bohrer verwendete Schneideinsätze mit entsprechendem Wechsel vierfach genutzt werden. Vorzugsweise wird der an die aktive konvexe Schneidkante des radial äußeren Schneideinsatzes angrenzende Schneidkantenabschnitt im wesentlichen parallel zur Bohrerlängsachse oder hiergegen unter einem Winkel unter 10° leicht geneigt. Der radial innere Schneideinsatz wird so angeordnet, daß die konvexe Abflachung der konkaven Nebenschneide, das ist das kurze Teilstück am der Nebenschneide entgegengesetzten Ende der konkaven Schneidkante, im Überschneidungsbereich zwischen der Außenplatte und der Innenplatte eingesetzt wird.

Vorzugsweise wird der zuvor beschriebene Scneideinsatz nach Anspruch 3 verwendet, wobei der radial innerste Schneideinsatz derart angeordnet ist, daß die genannte Kerbe im Bereich der Bohrerlängsachse liegt. Da an dieser Stelle die Drehgeschwindigkeit 0 oder selbst klein ist, wird durch die Kerbe der Schnittdruck vermieden. Beim radial außen angeordneten Schneideinsatz, bei dem die dachförmige Schneidkante als aktive Schneidkante dient, trennt die genannte Kerbe diese aktive Schneidkante einschließlich der Schneidecke von der der Werkstückbohrlochwand zugewandten (passiven) Schneidkante, so daß diese beim Bohrfortschritt geschont wird.

Um bei dem Bohrwerkzeug eine bessere Stabilisierung des zwischen der Spanfläche und der Freifläche gebildeten Keiles zu optimieren, insbesondere um im Mittenbereich eines Bohrers bei eingesetzten Schneideinsätzen den beim Bohren entstehenden Druck auf die Freifläche so gering wie möglich zu halten, wird weiterhin vorgeschlagen, daß mindestens der sich an die aktive Schneidkante anschließende Bereich der Freifläche eines Schneideinsatzes aus einer Schar von senkrecht zur Schneidkante liegenden Geraden gebildet wird, von denen jede in bezug auf die zu einer entsprechend den Bohrvorschub zu einer geneigten Gerade abgewickelten Raumkurve unter einem effektiven positiven (Frei-)Winkel geneigt ist. Durch diese Maßnahme wird jede Freifläche der stirnseitig angeordneten Schneideinsätze eines Bohrers entlang der gesamten Schneidkante, insbesondere im Bereich von Schneidkantenspitzen, dem sich aus der Bohrerrotation und dem axialen Vorschub ergebenden abgetragenen Fläche, nämlich dem Bohrgrund, derart angepaßt, daß sich an jedem Ort ein effektiver tatsächlicher positiver Freiwinkel ergibt, wodurch der Bohrer "beim Bohren frei ist und nicht im Übermittenbereich aufsitzt". Vorzugsweise ist dieser effektive positive Freiwinkel <15°, insbesondere liegt er zwischen 5° bis 9°.

Die Ermittlung der absoluten Freiwinkel der Freiflächenbereiche, die sich an die aktive Schneidkante eines Schneideinsatzes in einem Bohrwerkzeug anschließen, erfolgt folgendermaßen:

Für jeden Punkt einer aktiven Schneidkante eines an der Stirnseite angeordneten Schneideinsatzes wird für den fest vorgegebenen maximalen axialen Bohrvorschub die wendelförmige Raumkurve ermittelt, die anschließend zu einer Geraden (in einer Ebene) abgewickelt wird, welche relativ zu einer senkrechten Ebene zum Bohrvorschub liegt. Durch jeweilige Drehung dieser Geraden um den gewünschten Freiwinkel, den die an die aktive Schneidkante angrenzende Freifläche gegenüber dem Bohrlochgrund haben soll, erhält man jeweils im Anschluß an einen auf der aktiven Schneidkante liegenden Grenzpunkt den dortigen Freiflächenverlauf. Die Schar der jeweiligen Freiflächenverläufe ergibt dann die gesamte, an die aktive Schneidkante angrenzende Freifläche bzw. einen Teilbereich derselben.

Zur weiteren Erläuterung dient folgende Überlegung:
Jeder Punkt einer aktiven Schneidkante eines stirnseitig angeordneten Schneideinsatzes beschreibt beim Bohrvorschub bei zentrierter Bohrerausrichtung in axialer Richtung eine wendelförmige (helixförmige) Kurve, wobei sich aus der Gesamtheit dieser Kurven der Bohrgrund ergibt. Dreht man jede dieser wendelförmigen Kurve um einen gewünschten Freiwinkel, den der sich an die Schneidkante anschließende Freiflächenbereich haben soll, ergibt sich eine weitere Gruppe von wendelförmigen Raumkurven, die im Gegensatz zu ungedrehten jeweiligen wendelförmigen Kurve einen Abstand bzw. Freiwinkel zwischen dem Bohrgrund entstehen läßt. Da der Radius eines Punktes auf der aktiven Schneidkante in Draufsicht betrachtet vom Bohrzentrum gesehen nach außen größer wird, ergeben sich bei der Abwicklung der jeweiligen wendelförmigen Raumkurven Geraden unterschiedlicher Länge, wodurch sich auch erklärt, daß die jeweiligen Freiwinkel entlang der Schneidkante unterschiedlich groß sind. Die um den gewünschten tatsächlichen Freiwinkel verdrehte Helixschar dient somit als Stütz- oder Hüllkurve für die zu schaffende Freifläche.

Eine von der Wendelform abweichende Spiralform ergibt sich dann, wenn der Bohrer mit einer effektiven Schneide nicht nur bei dem angegebenen Nenndurchmesser, sondern auch zum Bohren von geringfügig größeren oder kleineren Bohrdurchmessern eingesetzt wird, wobei die Bohrerachse um ein entsprechend geringes Maß z.B. von einigen 1/10 mm aus der Bohrlochachse ausgelenkt wird. Um auch in diesem Fall einen entsprechenden effektiven Freiwinkel einstellen zu können, muß der effektive Freiwinkelverlust, der sich durch die Spiral- statt der Wendelbahn eines Schneidkantenpunktes ergibt, durch eine entsprechende Stauchung der Wendelform um eine Kreisbahn zu einer Spirale kompensiert werden.

Das geschilderte Verfahren läßt sich für jeden axialen Vorschub bzw. für jeden gewünschten tatsächlichen Freiwinkel anwenden, wobei der jeweils zugrunde gelegte Vorschub dann als der maximal zulässige Vorschub für den Bohrer anzusehen ist.

Ausführungsbeispiele der Erfindung sind in den Zeichnungen dargestellt. Es zeigen
- Fig. 1: eine Draufsicht auf einen erfindungsgemäßen Schneideinsatz,
- Fig. 2: eine Teilschnittansicht zur Darstellung der positiven Schneidgeometrie,
- Fig. 3: eine Schnittansicht eines erfindungsgemäßen Bohrwerkzeuges mit zwei Schneideinsätzen im Arbeitseinsatz und
- Fig. 4: eine Stirnansicht des Bohrwerkzeuges nach Fig. 3,
- Fig. 5: eine Detailansicht der spitzen Schneidecke (15),

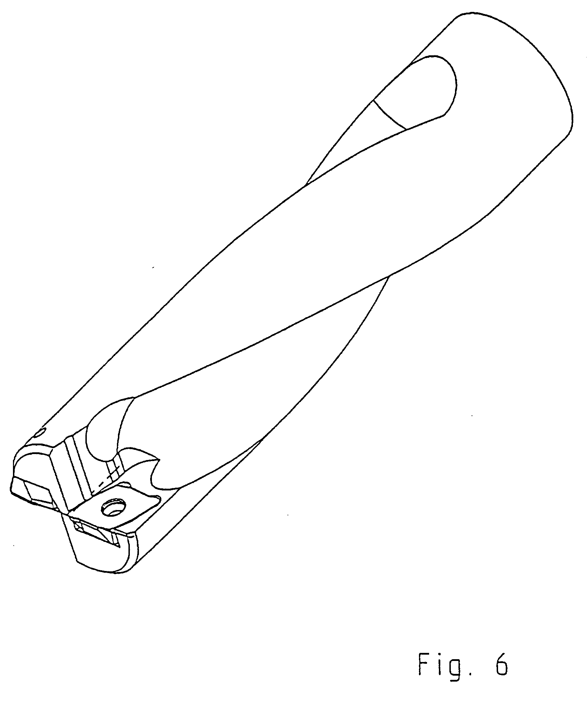

- Fig. 6: ein räumliches Bild des Bohrers,
- Fig. 7, 8: jeweils eine vergrößerte Detailansicht des spitzwinkligen Eckenbereiches eines Schneideinsatzes in unterschiedlichen Lagen beim Bohren,
- Fig. 9: eine perspektivische Ansicht des Schneideineinsatzes gemäß Fig. 1,
- Fig. 10: eine vergrößerte Teildarstellung einer spitzwinkligen Schneidecke gemäß Fig. 9,
- Fig. 11: eine vergrößerte Prinzipskizze der Lage der Kerbe einer Schneidentrennung in bezug auf die Bohrerlängsachse.
- Fig. 12: auf eine Ebene abgewickelte Raumkurven, die unter alleiniger Berücksichtigung des Freiwinkels und unter gemeinsamer Berücksichtigung der Summe aus dem Freiwinkel und dem Vorschub des Werkzeuges ergeben,
- Fig. 13: eine Draufsicht auf eine spiralförmige Raumkurve, die einen Schneidkantenpunkt eines Schneideinsatzes bei geringfügig exzentrisch ausgelenkter Bohrerachse durchläuft,
- Fig. 14, 15: eine jeweils um 90° versetzte Ansicht der spiralförmigen Raumkurve nach Fig. 13,
- Fig. 16: einen exemplarischen Schneideinsatz in schematischer Darstellung und
- Fig. 17, 18: jeweils einen Schnitt in Schnittebenen a und b.

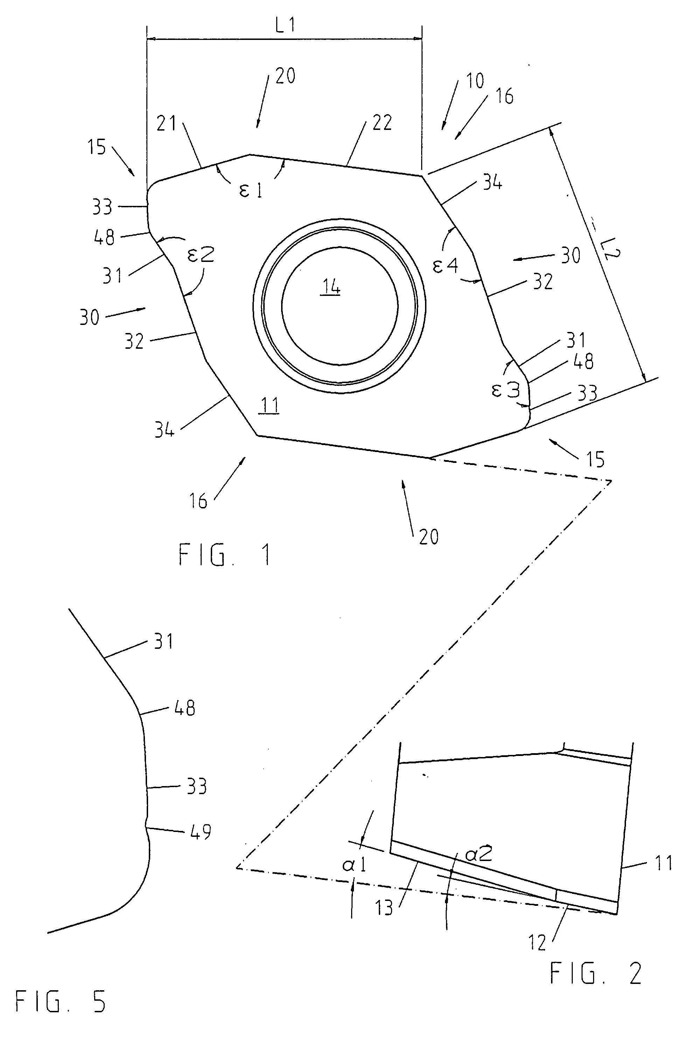

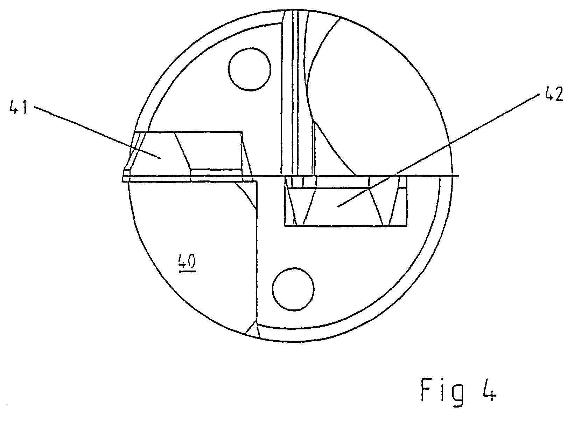

Der in Fig. 1 dargestellte Schneideinsatz 10 besitzt eine im wesentlichen rhombische Grundform mit einer Spanfläche 11, einer Bodenfläche sowie dazwischenliegenden Freiflächen, die jeweils zu Freiflächenabschnitten 12 und 13 (vgl. auch Fig. 2) abgewinkelt sind. Zur Befestigung des Schneideinsatzes ist ferner ein Loch 14 vorgesehen. Der Schneideinsatz besitzt eine positive Schneidengeometrie, im vorliegenden Fall unter Bildung von einem Freiflächenwinkel α₁ bzw. α₂ für die jeweiligen Freiflächenabschnitte 12 und 13. Die Spanfläche wird durch jeweils zwei gegenüberliegende konkave Schneidkanten 20 sowie konvexe Schneidkanten 30 gebildet. Die geradlinigen Schneidkantenabschnitte 21 und 22 der konvexen Schneidkante 20 bilden einen stumpfen Winkel ε₁ von (vorzugsweise 150° bis 180°). Die konkave Schneidkante 30 wird im wesentlichen durch Schneidkantenabschnitte 31, 32 und 34 gebildet, die Schneidkantenabschnitte 31 und 32 schließen einen Winkel ε₂ von etwa 200° ein, d.h. der Komplementärwinkel 360° -ε₂ entspricht in etwa dem Winkel ε₁. Es können jedoch auch verschieden große Winkel ε₁ und 360° -ε₂ gewählt werden.

Im Anschluß an die Schneidecke 15 entsprechend der spitzwinkligen Ecke der rhombischen Grundform besitzt die Schneidkante 30 einen Schneidkantenabschnitt 33, der mit dem hier angrenzenden Schneidkantenabschnitt 31 einen Winkel ε₃ von 145° bildet. Am anderen Ende der Schneidkante ist eine weitere Abflachung 34 angeordnet, die mit dem angrenzenden Schneidkantenabschnitt 32 einen Winkel ε₄ von 165° bildet. Die Schneidkantenabschnitte 21, 22 sind gleich lang, wohingegen der Schneidkantenabschnitt 32 etwa zwei- bis viermal doppelt so lang wie der Schneidkantenabschnitt 31 ausgebildet ist. Der Abschnitt 33 der konkaven Hauptschneide ist verhältnismäßig kurz zum Abschnitt 34 und bildet mit Abschnitt 31 einen Radius 48 von R = 1,5 mm. Der Abschnitt 34 ist etwa halb so lang wie Abschnitt 32.

Die Verbindungslinie der Schneidecken 15 und 16 im Bereich der Schneidkante 20 ist mindestens so groß wie die betreffende Verbindungslinie im Bereich der konkaven Schneidkante 30, vorzugsweise ist die dargestellte Länge l₁ größer als l₂, wobei l₁/l₂ zwischen 1 und 1,2 liegt. Die Schneidecken 15, 16 sowie die Übergangsbereiche zwischen den Schneidkantenabschnitten 21, 22; 31, 32; 32, 34 sind jeweils abgerundet.

Das im Prinzip nach dem Stand der Technik bekannte Bohrwerkzeug besitzt einen Schaft 40 mit jeweils in Aussparungen angeordneten, mehrere Schneidkanten aufweisenden auswechselbaren Schneideinsätzen 41, 42, von denen der erste Schneideinsatz 41 radial außen und der zweite Schneideinsatz 42 radial innen angeordnet ist. Die Schneideinsätze bzw. die dementsprechend ausgeformten Ausnehmungen entsprechen in der Geometrie dem vorbeschriebenen Schneideinsatz, wobei die aktive Schneidkante 43 des Schneideinsatzes 42 konvex und die aktive Schneidkante 44 des Schneideinsatzes 41 konkav sind. Durch die Schneidkantenabschnitte 31, 33 und dem Radius 48 wird beim Bohren eine Anführbohrungsrille geschaffen. Die Aufteilung der aktiven Schneiden 43 und 44 in mehrere Teilbereiche schafft beim Bohren den Vorteil, daß schmale Kurzspäne erzeugt werden, deren Abführung leicht möglich ist.

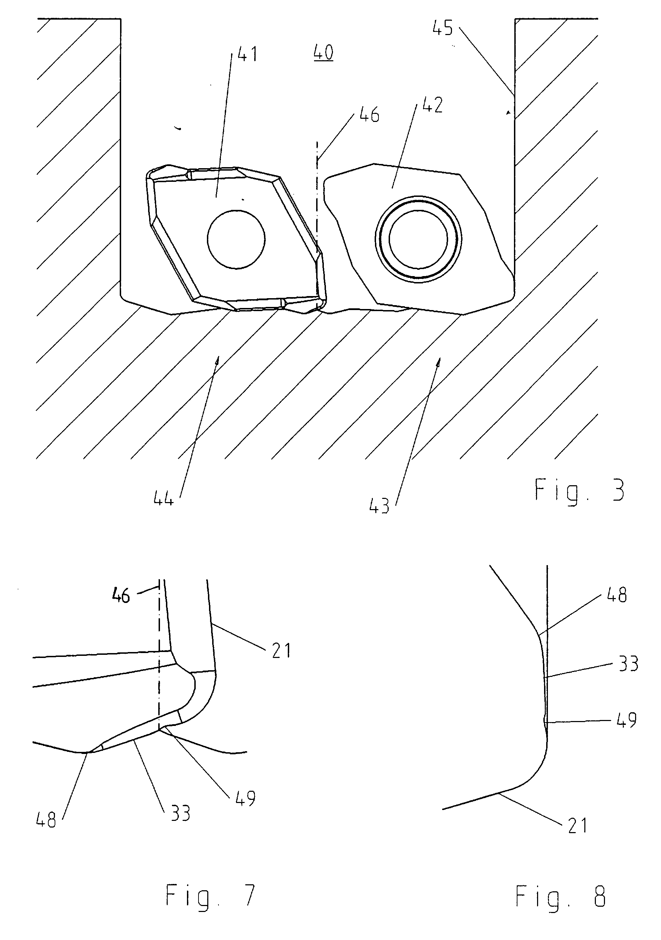

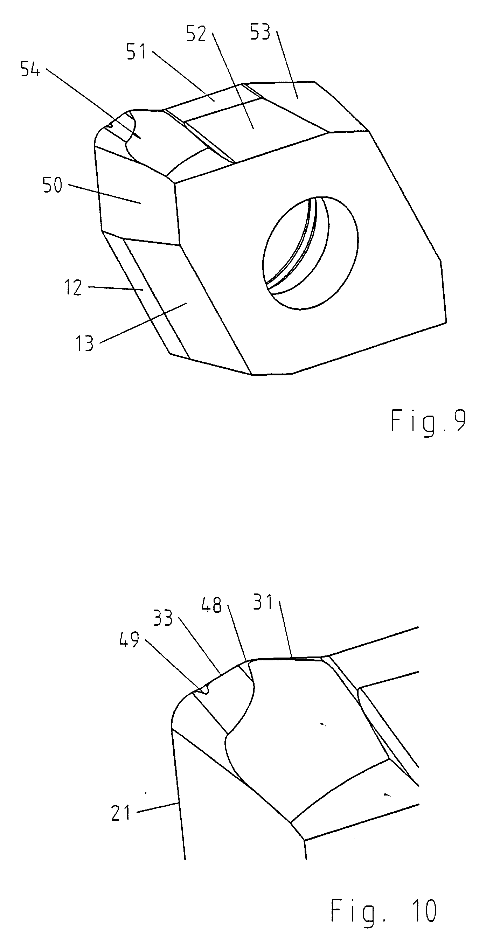

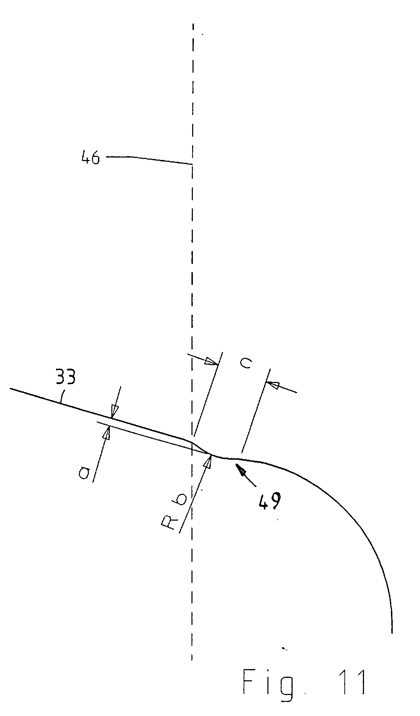

Fig. 7 und 8 verdeutlichen die Wirkung der Kerbe (Einziehung) 49, deren Lage und weitere Ausgestaltung auch anhand der Fig. 9 bis 11 ersichtlich ist. Die Kerbe 49 liegt bei dem innersten Schneideinsatz etwa in Höhe der Bohrachse 46, wobei die bevorzugte Lage der Kerbe im Übermittenbereich angrenzend an die Bohrachse 46 liegt (siehe Fig. 11). Hierdurch wird gewährleistet, daß der Schneideinsatz bei einem maximal angegebenen Vorschub in jedem Punkt ausreichend frei ist. Betreffende Vorschubbereiche für Bohrdurchmesser zwischen 11 mm bis 25 mm liegen zwischen f_{z} = 0,06 bis 0,25, bei Bohrdurchmessern zwischen 25 mm bis 55 mm zwischen 0,12 und 0,35. Die Einziehung 49 muß so gestaltet und dimensioniert sein, daß der Schneideinsatz bei jedem möglichen Vorschub frei ist und eine maximal große Fläche 54 (siehe Fig. 9) entsteht. Diese Fläche 54 muß stabil sein. Die Kerbe 49 läuft an der Freifläche aus.

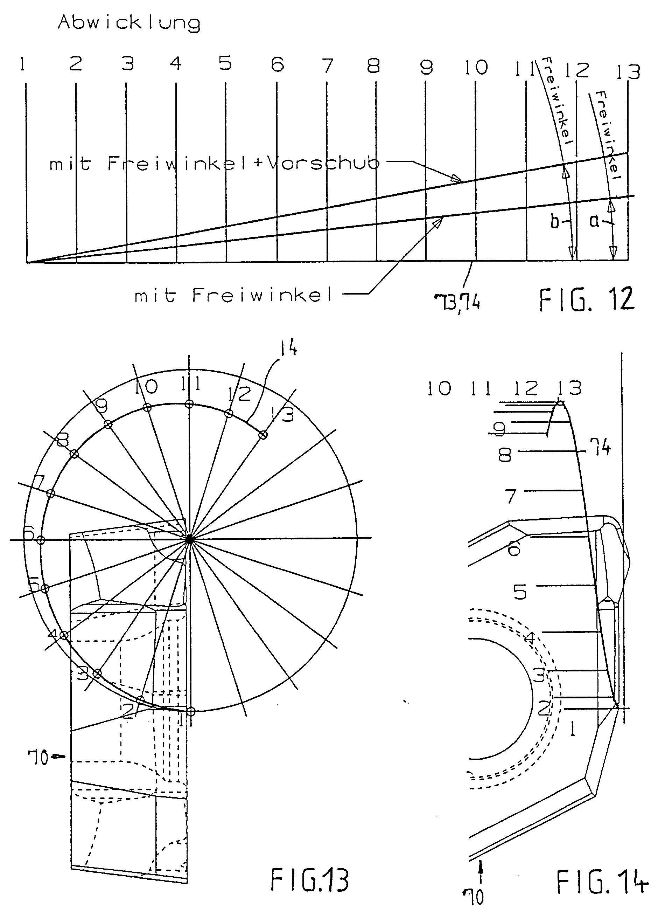

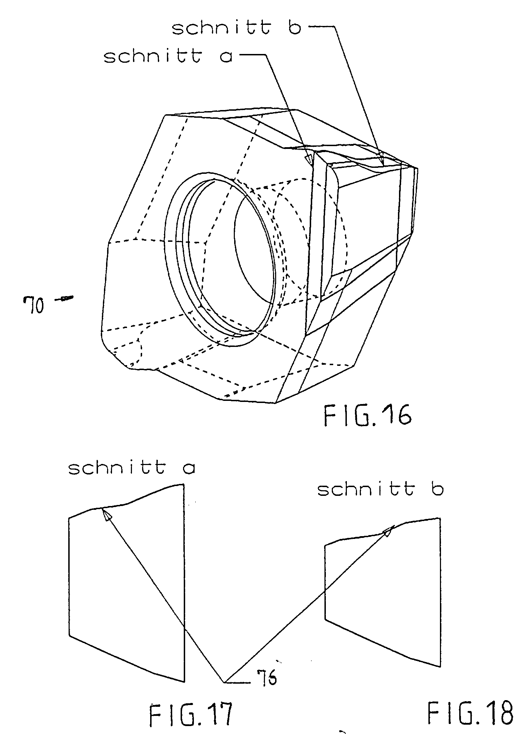

Die Freiflächengestaltung in Abhängigkeit der Einbaulage der Schneideinsätze, insbesondere im Mittenbereich des Bohrers bestimmt sich danach, daß jeder Punkt auf der Schneidkante mit einem bestimmten Abstand zur Bohrerachse 46 und seine dazugehörige Freiflächenlinie, zum Punkt auf demselben Schneideinsatz mit dem gleichen Abstand auf der gespiegelten Seite der Bohrerachse bei maximal angegebenem Bohrervorschub so liegt, daß der Bohrer beim Bohren frei ist und nicht im Übermittenbereich aufsitzt. Hierzu dienen folgende Überlegungen, die anhand der Fig. 12 bis 18 erläutert werden:

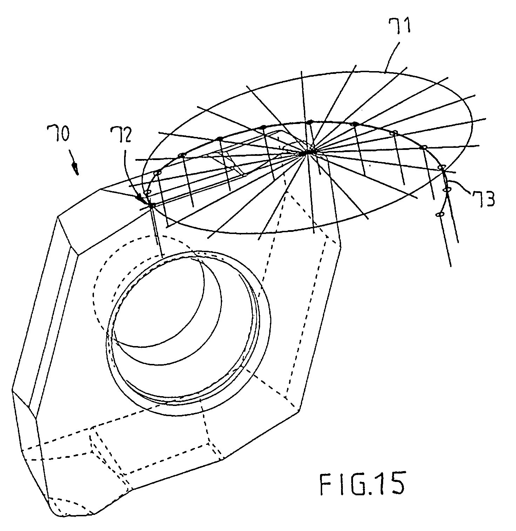

Jeder Punkt einer aktiv schneidenden Kante eines Schneideinsatzes an einem rotierenden Bohrer, der nicht im Bohrlochzentrum bzw. auf der Bohrerlängsachse liegt, beschreibt bei einer Bohrerdrehung ohne einen Vorschub eine in einer Ebene liegende Bahn, wie dies anhand des Schneideinsatzes 70 und der durch den Kreis 71 bestimmten Ebene, welche der Punkt 72 der Schneidkante durchläuft, aus Fig. 15 ersichtlich ist. Berücksichtigt man den Vorschub des Bohrers bzw. des Schneideinsatzes beim Bohren, ergibt sich eine helixartige Raumkurve 73, die bei exakt zentriertem Bohrer, d.h. beim Bohren eines Nenndurchmessers, eine Wendelform beschreibt. Abweichungen aus der Wendelform ergeben sich dann, wenn zum Bohren kleinerer oder größerer Durchmesser als dem Nenndurchmesser der Bohrer um einige zehntel Millimeter aus der Bohrlochachse ausgelenkt wird. Die diesbezügliche Spiralform als Projektion der Helix in eine Ebene ist aus Fig. 14 ersichtlich und mit Bezugszeichen 74 gekennzeichnet. Die abgewickelten Raumkurven 73, 74 entsprechend der waagerecht dargestellten Grundlinie in Fig. 12. Demgegenüber ist der auf einer Senkrechten zur Schneidkante liegende Punkt der unterhalb der Schneidkante liegenden Freifläche, welcher ebenfalls einer entsprechenden Raumkurve folgt, um den Freiwinkel a geneigt. Diese Freiwinkeleinstellung bleibt jedoch nur so lange erhalten, wie kein Bohrervorschub auftritt. Um einen effektiven Freiwinkel zu erhalten, ist somit der sich aus dem Bohrervorschub ergebende "Freiwinkelverlust" auszugleichen, was durch Gerade 75 verdeutlicht wird, welche den in bezug auf den ruhenden Schneideinsatz objektiven Freiwinkel b für jeden Freiwinkelteil unterhalb eines Schneidkantenpunktes zeigt. Beim fortschreitenden Bohrereinsatz kann so ein effektiver Freiwinkel der gewünschten Art bezogen auf den Vorschub unabhängig von der Freiflächenkontur des Schneideinsatzes 70 jeweils ermittelt werden. Die aus Bild 5 jeweils erhaltenen Schnitte A und B zeigen unterschiedliche Konturen 76 der Freifläche unterhalb des Schneidkantenpunktes 72.

Darüber hinaus ist es möglich, die in dem dargestellten und zuvor beschriebenen Bohrer eingesetzten Schneideinsätze axial zu drehen, d.h. gegenüber der Bohrerachse um einen Winkel zwischen vorzugsweise 0° bis 6° zu schwenken, womit der Freiwinkel entsprechend erhöht werden kann.

Möglich ist auch ein radiales Drehen des Schneideinsatzes, insbesondere des radial äußeren Schneideinsatzes, vorzugsweise um bis zu 30°. Bei einem derartig radial um das Bohrzentrum verschwenkten Schneideinsatz ergeben sich entsprechend vergrößerte Spankammern. Möglich ist es ebenso, einen Schneideinsatz, z.B. den radial äußersten, um den radial äußersten Schneidkantenpunkt radial zu kippen, wobei der Kippwinkel zwischen -10° bis 10° gewählt werden kann. Auch Drehungen um eine senkrecht zur Bohrerachse stehende Achse um 2° bis 12° bei der radial äußeren Platte oder bis zu 10° bei der radial inneren Platte sind ebenso möglich wie ein innerster Schneideinsatz, der gegenüber dem radial äußeren Schneideinsatz (oder den übrigen Schneideinsätzen) einen axialen Überstand hat, also beim Bohren voreilt. Das betreffende Überstandsmaß liegt vorzugsweise unter 2 mm.

Sämtliche vorstehend ausgeführten Kippungen der Schneideinsätze oder deren geometrische Anordnung können in beliebiger Art miteinander kombiniert werden.

Vorzugsweise soll beim Bohren der in Fig. 1 dargestellte Schneideinsatz verwendet werden, wobei alle vier Schneiden nutzbar sind. Dies soll jedoch nicht ausschließen, daß bei schwer zu zerspanenden Materialien auf unterschiedliche Geometrien, Freiwinkel, Werkstoffzusammensetzungen und Beschichtungen der Schneideinsätze bei der Wahl innen angeordneten Schneidplatte im Vergleich zu der außen angeordneten Schneidplatte zurückgegriffen wird. Es können somit auch unterschiedliche Schneideinsätze innen und außen verwendet werden, um hierdurch die Standzeiten und den Spanabfluß zu optimieren.

Im übrigen wird zu der Bohrerausgestaltung sowie der Schneideinsatzanordnung auf die eingangs der Beschreibung aufgeführten Ausbildungen verwiesen, die in entsprechender Weise auch mit dem erfindungsgemäßen Schneideinsatz realisiert werden können.

## Patentansprüche

1. Schneideinsatz (10) zum Bohren mit im wesentlichen rhombischer Grundform, deren vier jeweils Schneidecken (15, 16) bildende Schneidkanten (20, 30) gebrochen sind, wobei zwei erste gegenüberliegende Schneidkanten (20) jeweils Schneidkantenabschnitte (21, 22) aufweisen, die einen stumpfen Winkel (ε₁) zwischen 140° und <180° einschließen,
**dadurch gekennzeichnet,**
**daß** die beiden anderen gegenüberliegenden zweiten Schneidkanten (30) eine Einschnürung aufweisen, wodurch zwei Schneidkantenabschnitte (31, 32) gebildet werden, die einen Winkel (ε₂) zwischen >180° und 230° einschließen.

2. Schneideinsatz nach Anspruch 1, **dadurch gekennzeichnet, daß** im Bereich der spitzwinkligen Schneidecken (15) der rhombischen Grundform die sich an die erste (konvexe) Schneidkante (20) jenseits der Schneidecke (15) anschließende zweite Schneidkante (30) einen Abschnitt (33) aufweist, der vorzugsweise mit der ersten Schneidkante (20) einen Winkel >90° und mit dem sich anschließenden Schneidkantenabschnitt (31) der zweiten (konkaven) Schneidkante (30) einen Winkel (ε₃) zwischen 140° und 175° bildet.

3. Schneideinsatz nach Anspruch 2, **dadurch gekennzeichnet, daß** zwischen der spitzwinkligen Schneidecke (15) und dem ersten Schneidkantenabschnitt (33) der eine Einschnürung aufweisenden Schneidkante eine Kerbe (49) vorgesehen ist, welche die Schneidecke (15) und den Schneidkantenabschnitt (33) derart voneinander trennt, daß beim Zerspanungseinsatz der dachförmig ausgebildeten Schneidkante der Schneidkantenabschnitt (33) nicht mit dem Werkstück in Kontakt kommt.

4. Schneideinsatz nach einem der Ansprüche 1 bis 3, **dadurch gekennzeichnet, daß** die (längeren) Schneidkantenabschnitte (31, 32), die einen Winkel (ε₂) zwischen >180° und 230° einschließen, ein Längenverhältnis zwischen 1 bis 1:4 aufweisen.

5. Schneideinsatz nach einem der Ansprüche 1 bis 4, **dadurch gekennzeichnet, daß** der Schneidkantenabschnitt (33) der konkaven Schneidkante (30), der sich jeweils an eine Schneidecke (15) anschließt, im Verhältnis zum Abschnitt (34) kurz ist und bildet mit Abschnitt (31) einen Radius (48) von R = 1,0 bis 2,0 mm.

6. Schneideinsatz nach einem der Ansprüche 1 bis 5, **dadurch gekennzeichnet, daß** der die konvexe Schneidkante (20) bildende Winkel (ε₁) im wesentlichen gleich dem den Komplementärwinkel (360° -ε₂) des betreffenden Winkels (ε₂) der konkaven Schneidkante (20) ist.

7. Bohrwerkzeug für Bohrungen in Vollmaterial, mit einem Schaft (40) und mindestens zwei an der Stirnseite des Schaftes in je einer Aussparung angeordneten, mehrere Schneidkanten aufweisenden auswechselbaren Schneideinsätzen (41, 42) nach einem der Ansprüche 1 bis 6, deren Arbeitsbereiche aneinander angrenzen und sich teilweise überdecken, wobei jeder Schneideinsatz (41, 42) Schneidkanten (43, 44) mit zueinander geneigt angeordneten Schneidkantenabschnitten aufweist, die im Bearbeitungszustand gleichzeitig in Eingriff stehen, wobei der radial innerste Schneideinsatz (42) unmittelbar an die Bohrerachse (46) angrenzt oder diese geringfügig überschreitet, **dadurch gekennzeichnet, daß** der radial äußere Schneideinsatz (41) eine konkave aktive Schneidkante (44) und der radial innere Schneideinsatz (42) eine konvexe aktive Schneidkante (43) aufweist.

8. Bohrwerkzeug nach Anspruch 7, **dadurch gekennzeichnet, daß** mindestens der sich an die aktive Schneidkante (43, 44) anschließende Bereich der Freifläche aus einer Schar von senkrecht zur Schneidkante (43, 44) liegenden Geraden gebildet wird, von denen jede in bezug auf die zu einer entsprechend dem Bohrvorschub (f_{z}) zu einer geneigten Gerade abgewickelten Raumkurve unter einem effektiven positiven Frei-Winkel ( α) geneigt ist.

9. Bohrwerkzeug nach Anspruch 8, **dadurch gekennzeichnet, daß** der effektive Freiwinkel (α) < 15° ist, vorzugsweise zwischen 5° und 9° liegt.

10. Bohrwerkzeug nach Anspruch 8 oder 9, **dadurch gekennzeichnet, daß** unterhalb eines an die Schneidkante (43, 44) angrenzenden Freiflächenbereiches mindestens ein weiterer Freiflächenbereich unter einem größeren Freiwinkel als dem absoluten Freiwinkel des ersten Freiflächenbereiches angeordnet ist.

## Claims

1. Cutting insert (10) for drilling with a substantially rhomboid basic shape, whose four cutting edges (20, 30) forming cutting corners (15, 16) are broken, whereby two first opposite cutting edges (20) each have cutting edge segments (21, 22) forming an obtuse angle (ε₁) between 140° and < 180°,
**characterized in that**
the other opposite cutting edges (30) have an constriction whereby two cutting edge segments (31, 32) are formed, which enclose an angle (ε₂) between > 180° and 230°.

2. Cutting insert according to claim 1, **characterized in that** in the area of the acute-angle cutting corners (15) of the rhomboid basic shape, the second cutting edge (30) adjoining the first (convex) cutting edge (20) beyond the cutting corner (15) has a segment (33) which preferably forms with a first cutting edge (20) an angle of > 90° and with the adjoining cutting edge segment (31) of the second (concave) cutting edge (30) an angle (ε₃) between 140° and 175°.

3. Cutting insert according to claim 2, **characterized in that** between the acute-angle cutting corner (15) and the first cutting edge segment (33) of the cutting edge provided with a constriction, a notch (49) is provided, which separates the cutting corner (15) and the cutting edge segment (33) in such a manner that during the machining operation the roof-shaped cutting edge of the cutting edge segment (33) is not in contact with the workpiece.

4. Cutting insert according to one of the claims 1 to 3, **characterized in that** the (longer) cutting edge segment (31, 32), which form an angle (ε₂) between > 180° and 320°, have a length ratio between 1 to 1 : 4.

5. Cutting insert according to one of the claims 1 to 4, **characterized in that** the cutting edge segment (33) of the concave cutting edge (30), each adjoining a cutting corner (15), is short in relation to the segment (34) and forms with the segment (31) a radius (48) of R = 1,0 to 2,0 mm.

6. Cutting insert according to one of the claims 1 to 5, **characterized in that** the angle (ε₁) forming the convex cutting edge (20) is substantially equal to the complementary angle (360° - ε₂) of the respective angle (ε₂) of the concave cutting edge (20).

7. Drilling tool or drilling in solid materials, with a shaft (40) and at least two replaceable cutting inserts (41, 42) according to one of the claims 1 to 6, having several cutting edges arranged on the front side of the shaft each in a recess, whose work areas border on each other or overlap partially, whereby each cutting insert (41, 42) has cutting edges (43, 44) with cutting edge segments inclined with respect to each other, which are simultaneously in operation during drilling whereby the radially innermost cutting insert (42) borders directly on the drill axis (46) or projects slightly beyond the same, **characterized in that** the radially outward cutting insert (41) has a concave active cutting edge (44) and the radially inner cutting insert (42) has a convex active cutting edge (43).

8. Drilling tool according to claim 7, **characterized in that** at least the area of the clearance face adjoining the active cutting edge (43, 44) is formed by a group of straight line perpendicular to the cutting edge (43, 44), each one of the lines is inclined at an effective positive clearance angle (α) with respect to the three-dimensional curve developed in a straight line inclined in relation to the drill advance (f_{z}).

9. Drilling tool according to claim 8, **characterized in that** the effective clearance angle (α) < 15°, preferably ranges between 5° and 9°.

10. Drilling tool according to claim 8 or 9, **characterized in that**, that underneath a clearance face area bordering on the cutting edge (43, 44) at least one further clearance face area is arranged at a greater clearance angle than the absolute clearance angle of the first clearance-face area.

## Revendications

1. Insert de coupe (10) à percer avec une forme de base pour l'essentiel rhomboïdale dont les quatre tranchants (20, 30) formant respectivement des coins de coupe (15, 16) sont brisés, deux premiers tranchants (20) placés en vis-à-vis présentant respectivement des sections de tranchant (21, 22) qui incluent un angle obtus (ε₁) compris entre 140° et <180°,
**caractérisé par le fait**
**que** les deux autres deuxièmes tranchants (30) placés en vis-à-vis présentent une constriction par laquelle sont formées deux sections de tranchant (31, 32) qui incluent un angle (ε₂) compris entre >180° et 230°.

2. Insert de coupe selon la revendication 1, **caractérisé par le fait que** dans la zone des coins de coupe (15) à angle aigu de la forme de base rhomboïdale, le deuxième tranchant (30) qui est contigu au premier tranchant (convexe) (20) au-delà du coin de coupe (15) présente une section (33) qui, de préférence, forme avec le premier tranchant (20) un angle >90° et avec la section de tranchant contiguë (31) du deuxième tranchant (concave) (30) un angle (ε₃) compris entre 140° et 175°.

3. Insert de coupe selon la revendication 2, **caractérisé par le fait que**, entre le coin de coupe (15) à angle aigu et la première section de tranchant (33) du tranchant présentant une constriction, une encoche (49) est prévue qui sépare le coin de coupe (15) et la section de tranchant (33) d'une telle manière l'un de l'autre que, lors de l'opération d'enlèvement de copeaux du tranchant réalisé en forme de toit, la section de tranchant (33) n'entre pas en contact avec la pièce.

4. Insert de coupe selon l'une des revendications 1 à 3, **caractérisé par le fait que** les sections de tranchant (plus longues) (31, 32) qui incluent un angle (ε₂) compris entre >180° et 230° présentent un rapport de longueur compris entre 1 et 1 à 4.

5. Insert de coupe selon l'une des revendications 1 à 4, **caractérisé par le fait que** la section de tranchant (33) du tranchant concave (30), qui est respectivement contiguë à un coin de coupe (15) est courte par rapport à la section (34) et forme avec la section (31) un rayon (48) de R = 1,0 à 2,0 mm.

6. Insert de coupe selon l'une des revendications 1 à 5, **caractérisé par le fait que** l'angle (ε₁) formant le tranchant convexe (20) est pour l'essentiel égal à l'angle complémentaire (360° -ε₂) de l'angle respectif (ε₂) du tranchant concave (20).

7. Outil à percer pour des perçages dans du matériau plein, comprenant une tige (40) et au moins deux inserts de coupe (41, 42) échangeables selon l'une des revendications 1 à 6, qui sont disposés sur le front de la tige dans respectivement un évidement et qui présentent plusieurs tranchants, les zones de travail de ces inserts de coupe sont contiguës l'une à l'autre et se recouvrent partiellement, chaque insert de coupe (41, 42) présentant des tranchants (43, 44) avec des sections de tranchant qui sont disposées de manière à être inclinées l'une vers l'autre et qui, en état d'usinage, sont simultanément en prise, l'insert de coupe (42) situé radialement le plus à l'intérieur étant directement contigu à l'axe de foret (46) ou dépassant légèrement celui-ci, **caractérisé par le fait que** l'insert de coupe (41) radialement extérieur présente un tranchant (44) concave actif et que l'insert de coupe (42) radialement intérieur présente un tranchant (43) convexe actif.

8. Outil à percer selon la revendication 7, **caractérisé par le fait que** du moins la zone de la face de dépouille, qui est contiguë au tranchant actif (43, 44) est formée d'un groupe de lignes droites situées verticalement au tranchant (43, 44), dont chacune est inclinée sous un angle de dépouille positif effectif (α) par rapport à la courbe en trois dimensions rectifiée de manière à avoir une droite qui est inclinée selon l'avance de perçage (f_{z}).

9. Outil à percer selon la revendication 8, **caractérisé par le fait que** l'angle de dépouille effectif (α) est <15°, de préférence il est compris entre 5° et 9°.

10. Outil à percer selon la revendication 8 ou 9, **caractérisé par le fait que**, au-dessous d'une zone de face de dépouille qui est contiguë au tranchant (43, 44), du moins une autre zone de face de dépouille est disposée sous un angle de dépouille plus grand que l'angle de dépouille absolu de la première zone de face de dépouille.
